# EUROPEAN PATENT SPECIFICATION

(11) **EP 1 462 153 B1**
(45) Date of publication and mention of the grant of the patent: **18.11.2009**
(21) Application number: 01275017.0
(22) Date of filing: 14.12.2001
(51) Int. Cl.: B01D 24/40, B01D 24/12

(54) **FILTRATION DEVICE**
FILTRIERVORRICHTUNG
DISPOSITIF DE FILTRATION

(43) Date of publication of application: 29.09.2004
(73) Proprietor: P & W Invest Vermögensverwaltungsgesellschaft mbH, 5020 Salzburg (AT)
(72) Inventor: IMAI, Fumihito, Moriyama-shi, Shiga 524-0104 (JP); POLAK, Walter, A-5020 Salzburg (AT)
(74) Representative: Hagemann, Heinrich
(86) International application number: PCT/JP2001/011012
(87) International publication number: WO 2003/051486

(56) References cited:
- EP-A- 0 943 364
- DE-A- 2 059 261
- GB-A- 1 342 082
- JP-A- 2000 024 485
- JP-A- 2002 001 015
- JP-U- 6 003 404

## Description

### Technical Field

The present invention relates to a filtering apparatus for filtering liquid such as water. More particularly, the invention relates to a technique for achieving efficient filtration wherein the momentum of the liquid discharged upward is effectively restricted within a small space, thereby to allow uniform infiltration of the liquid over a surface of a filter medium inside a relatively small filtering tower.

### Background Art

A filtering apparatus of the aforementioned type is disclosed for example in JP 2000/024485 A and GB 1 342 082 A.

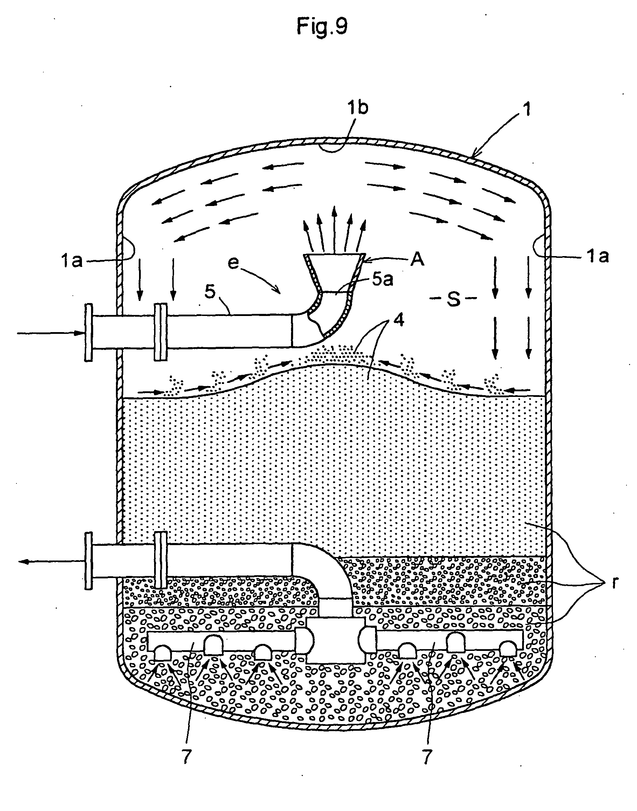

A conventional filtering apparatus shown in Fig. 9 includes, within a filtering tower 1 having a lid, a filtering section (r) comprising a plurality of kinds of filter media, a liquid collecting section 7 disposed downwardly of the filtering section (r), and a liquid feeding section (e) disposed upwardly of the filtering section (r). The liquid feeding section (e) includes a liquid feeding pipe 5 inserted into the filtering tower 1 from the outside thereof and having an orifice 5a oriented upward and formed at the leading end thereof, and a diffuser (A) for acting on the liquid being discharged upward from the orifice 5a.

The diffuser A is a tapered construction whose diameter increases upward. In other words, this diffuser comprises a funnel-like member for allowing the liquid to be filtered to be discharged while being diffused toward the outer peripheral side over a wide range from the upward direction to obliquely upward directions. With this, a portion of the liquid discharged from the orifice 5a is caused to run along a ceiling face 1b of the filtering tower 1 while another portion thereof is caused to fall before reaching the ceiling face 1b. Consequently, the filtering liquid is intended to fall uniformly onto over substantially entire top surface of a filter medium layer 4.

However, it has been shown that when the filtering apparatus having the above-described conventional construction is actually put into use, as indicated by arrows in Fig. 9, most of the filtering liquid discharged from the diffuser A flows down along the ceiling face 1b and an inner peripheral surface of a lateral face 1a, that is, the liquid flows down in a concentrated manner on the outer peripheral side inside the cylindrical filtering tower 1. And, it has been confirmed that by the momentum of the liquid concentrated on the outer peripheral side of the filtering tower 1, the filter medium layer 4 is disturbed and stirred up and displaced toward the vertical axis of the filtering tower 1, so that as shown in Fig. 9 the upper surface of the filter medium layer 4 is formed into a mountain-like shape with the inner radius side thereof being raised and its outer radius side thereof being depressed. That is to say, in the actual use, the liquid is concentrated on the outer peripheral side and may not be diffused sufficiently over the entire top surface of the filter medium layer 4. As a result, the flatness of the top surface of the filter medium layer 4 tends to be impaired, thus tending to invite insufficient filtering performance of the filter medium layer 4. In this respect, there has been room for improvement.

The occurrence of the above-described problem seems to be attributable to a background situation as follows. Namely, as the filter media employed by the conventional filtering apparatus, medium consisting mainly of sand having a relative large specific gravity was often employed previously. Hence, when the liquid is discharged at a standard discharge speed (2 m/sec approximately), the filtering operation was possible with maintaining the flatness of the top surface of the filter medium layer 4. In recent years, however, in order to allow effective back washing of the filter medium layer 4 with a limited amount of water, media comprising special ceramic, activated carbon or the like having a relatively small specific gravity have often been employed. With such decrease in the specific gravity of the material forming the filter medium layer 4, the above-described phenomenon of stirring-up of the filter media and the resultant impairment of the flatness of the top surface of the filter medium layer 4 tends to occur more likely (the term "back washing" refers to an operation or process in which in the event of reduction in the filtering ability due to e.g. accumulation of solid content in the filtering liquid on the filter medium layer, the water is discharged from the liquid collecting section 7 provided at the lower portion of the filtering tower and adapted normally for collecting the filtered water or the like, thereby to release the solids from the filter medium layer 4, so that the released solids may be discharged together with the back washing water through the diffuser A operable normally for discharging the liquid to be filtered).

Therefore, with such reduction in the weight of the filter medium, even with the discharging speed of water remaining the same as before, the surface of the filter medium tends to be disturbed to impair the flatness of the top face of the filter media. Hence, concentration of the filtering liquid occurs at the bottomed or lowered areas in the filter media surface, thus resulting in deterioration of filtering precision as well as reduction in the effective volume of the filter media 4 actually effective for entrapment of solids or the like contained in the filtering liquid. Consequently, the filtering operation period will be reduced disadvantageously and the filtering efficiency will also suffer.

In order to achieve uniformity in the falling movement of the filtering liquid for solving the above-described inconvenience, it is conceivable to reduce the discharging speed of water or conversely to increase the capacity of the filtering tower. With the former method, however, the filtering ability per unit time period, namely, the filtering efficiency, will be reduced. With the latter method, the space required for installing the filtering tower and the cost of the tower will increase disadvantageously, making the existing system unusable. Hence, in reality, neither method have been able to provide an effective solution.

An object of the present invention is to provide an apparatus which allows use of the existing filtering tower without its enlargement and which allows uniform falling of the filtering liquid over the substantially entire top surface of the filter medium layer 4, thus making it readily possible to maintain the flatness of the top surface of the filter medium layer 4 even when light-weight medium is employed, thereby to allow the filter medium layer 4 as well as the entire filtering apparatus to achieve their desired filtering performance.

### Disclosure of the Invention

The essential concept of the invention lies in configuring, in place of the conventional simple funnel-like diffuser, a diffuser which provides a damping function for damping the momentum of water discharged from an orifice within the diffuser as well as a diffusing discharging function for diffusing and discharging the damped liquid flow in a plurality of directions. In other words, the concept is to provide the diffuser with high functionality and multiple functions.

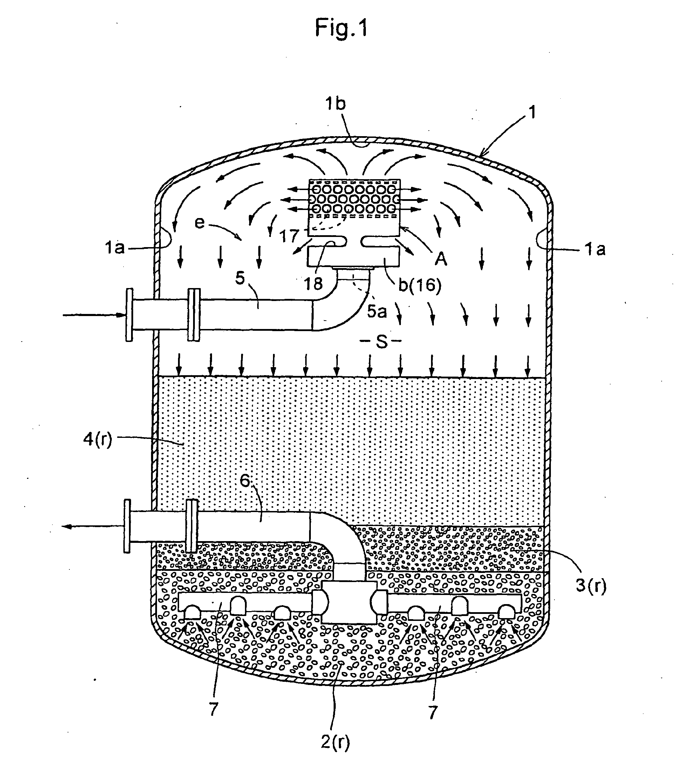

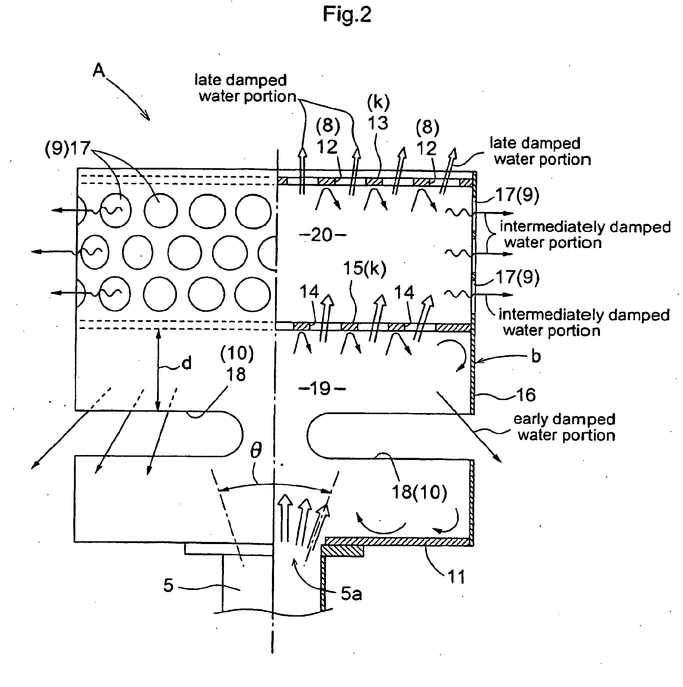

Namely, according to the construction relating to claim 1, as illustrated in Figs. 1 and 2, a filtering apparatus includes, within a filtering tower 1 having a lid, a filtering section (r), a liquid collecting section 7 disposed downwardly of the filtering section (r), and a liquid feeding section (e) disposed upwardly of the filtering section (r), the liquid feeding section (e) including a liquid feeding pipe 5 inserted into the filtering tower 1 from the outside thereof and having an orifice 5a oriented upward and formed at the leading end thereof, and a diffuser (A) for acting on the liquid being discharged upward from the orifice 5a;
wherein said diffuser (A) includes a damping portion (k) for damping the momentum of the liquid discharged from the orifice (5a), a first discharging portion 8 for upwardly discharging the liquid damped by the damping portion (k), a second discharging portion 9 for laterally discharging the liquid damped by the damping portion (k), and a third discharging portion 10 for downwardly discharging the liquid damped by the damping portion (k), said first, second and third discharging portions 8, 9 and 10 being stacked one on another from the top to the bottom in the order of the first discharging portion 8, the second discharging portion 9 and the third discharging portion 10.

According to the construction of claim 1, the diffuser includes the damping portion for damping the momentum of the liquid discharged from the orifice of the liquid feeding section, and this damped liquid is discharged upwardly, laterally and downwardly from the diffuser. Hence, the liquid can fall gently onto the filter media surface over a large area inside the filtering tower. Therefore, the phenomenon with the conventional apparatus, i.e. the stirring-up disturbance of the filter medium due to the strong collision of the liquid against the outer radius area is eliminated, and the filtering operation can proceed with the top surface of the filter medium being maintained flat. Consequently, it is possible to effectively utilize the entire filter medium and the desired filtering precision and continuous operation time can be obtained.

That is to say, according to the invention, the construction of the diffuser is modified so that the momentum of the filtering liquid discharged from the orifice of the liquid feeding section can be damped within the diffuser and also this liquid has been directed already in the multiple directions of upper, lateral and downward directions when it is about to be discharged from the diffuser. Therefore, there is achieved the distinguished effect of eliminating necessity of making any modifications in the parts of the apparatus, such as the shape or capacity of its filtering tower per se or the discharging speed of the filtering liquid at the orifice of the liquid feeding section, other than the above modification of the diffuser construction.

According to the filtering apparatus recited in claim 1, with the inventive modification of the diffuser construction, after the filtering liquid has been damped within the diffuser, this liquid can be discharged inside the filtering tower over an extended angular range from the upward, lateral and downward sides. Hence, the feeding of the liquid to the filter medium can take place in the most uniform condition possible, with using the existing system without enlargement of the filtering tower and also with using the light-weight filter medium which can reduce the amount of water required for back washing. As a result, the desired filtering performance can be obtained without disturbing the flatness of the top surface of the filter material, and the total performance of the apparatus has been further improved.

As illustrated in Fig. 2, in the construction of claim 1, the diffuser A includes a box body (b) consisting essentially of a bottom face member 11 defining said orifice 5a, a top face member 13 disposed upwardly of the bottom face member 11, and a lateral face member 16 extending from the bottom face member 11 to the top face member 13, a partitioning member 15 having a plurality of holes being interposed between the bottom face member 11 and the top face member 13;
wherein upper and lower spaces 20, 19 partitioned from each other by said partitioning member 15 together form said damping portion (k);
said first discharging portion 8 comprises a plurality of upwardly directed holes 12 defined in said top face member, said second discharging portion 9 comprises a plurality of lateral holes 17 defined in said lateral face member at a portion thereof located between said top face member and said partitioning member; and said third discharging portion comprises a laterally elongated slot 18 formed at a portion of said lateral face member at a portion thereof downwardly spaced apart from said partitioning member by a predetermined distance.

According to the construction of figure 2, the liquid discharged from the orifice of the liquid feeding section first reaches the partitioning member and a portion of this liquid passes the holes of this partitioning member to flow to the upper space of the partitioning member, whereas the remaining portion of the liquid collides against the remaining face portion of the plate other than the holes thereof will be bounced back and flow obliquely downward. This collision against the partitioning member provides reduction in the discharging speed of the liquid, that is, the damping effect. The liquid discharged from the orifice will be discharged upward while being laterally diffused over a diffusion angle determined by the kind of the liquid or the properties thereof. Hence, a portion of the liquid will move along the vertical direction to reach the partitioning member, while a further portion of the liquid will flow obliquely upward to reach the partitioning member. Accordingly, the liquid passing through the holes of the partitioning member includes a portion moving along the vertical direction, a further portion moving obliquely upward, etc.. Also, regarding the bouncing direction of the liquid collided against and bounced back from the partitioning member, a portion of the liquid will be bounced along the vertical direction while another portion will be bounced along an obliquely downward direction.

And, since the third discharging portion comprising an elongated slot is provided at a height position of the lateral face member of the box body forming the diffuser, which position is spaced apart from the partitioning member downwardly by a predetermined distance, there is obtained a tendency that the portion of the liquid bounced off the partitioning member having a relative large incident angle (reflection angle), that is, the bounced liquid portion resulting from a near head-on collision, will be discharged through the elongated slot to the outside of the diffuser. This means that the third discharging portion discharges the bounced liquid portion whose momentum has been sufficiently damped as the result of its collision at a large incident angle causing significant energy loss and which flows along the obliquely downward direction having a relatively large downward vector component (see Fig.2). Further, since this third discharging portion comprises a laterally elongated slot, this discharges the liquid obliquely downward over the maximum peripherally extended angular range.

The liquid portion introduced through the holes of the partitioning member into the upper space will then move upward with further lateral diffusion to reach the top face. In the course of this, in case this upper space has a sufficient vertical height, the liquid portion may reach the lateral face directly. Therefore, the liquid portion reaching the holes of the top face will be discharged directly through the upward holes acting as the first discharging portion toward the ceiling face of the filtering tower, whereas the liquid portion which has collided against the top face will be bounced off to move then downward or obliquely downward.

That is to say, the liquid portion discharged from the first discharging section will be discharged while being damped by the constricting effect when it is caused to pass the holes at the two portions in the partitioning member and the top face member and the further effect when it is forced to pass the upper and lower spaces. And, the liquid portion which has collided against the top face member and been bounced off it will be discharged from the lateral holes while being disturbed within the upper space, i.e. through the second discharging portion to the outside of the diffuser. And, its discharging operation will take place laterally over a relatively large angular range including the obliquely downward, horizontal, obliquely upward directions, etc. With the above-described functions combined, as shown in Fig. 1, the liquid discharged through the first and third discharging portions to the outside of the diffuser will be diffused over the wide angular range from the vertical upward to the nearly perpendicular, obliquely downward directions and in the effectively damped condition.

According to the filtering apparatus of figure 2, with such diffuser which can be easily made, wherein the partitioning member defining a plurality of holes is disposed inside a box body defining the number of holes and the elongate slot in its lateral face and top face, the distinguished effect of the invention can be obtained. Therefore, the intended object has be achieved economically and reasonably.

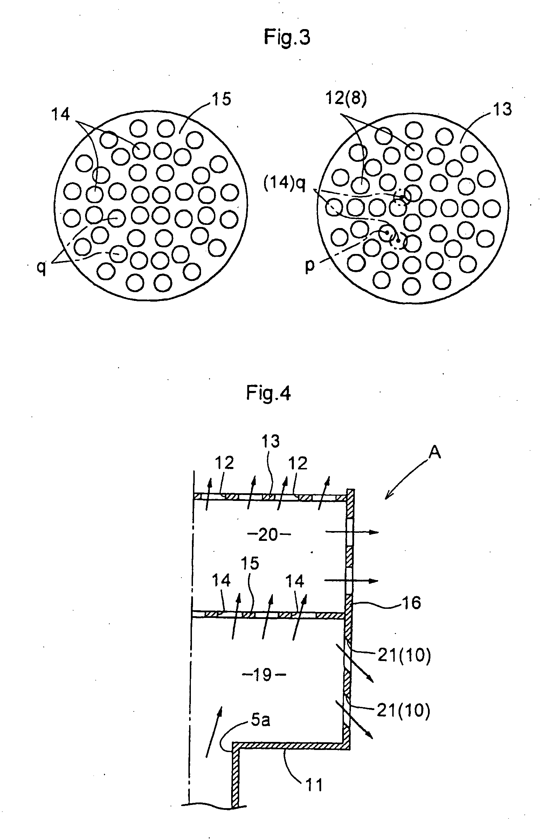

As illustrated in Fig. 3, in the construction of claim 1, the holes 14 defined in the partitioning member 15 and the holes 12 defined in the top face member 13 are arranged so as not be overlapped in a plan view.

According to the construction of figure 3, the holes disposed vertically relative to each other are so arranged not to be overlapped with each other in the plan view. This arrangement makes it difficult for the liquid discharged from the orifice to pass the holes at these two upper and lower positions smoothly without any interference. In other words, the arrangement can ensure that the liquid just passing the holes 14 of the partitioning member 15 may be reliably guided so as to subsequently collide against the bottom face of the top face member 13. As a result, the liquid from the first discharging portion can be discharged in as much damped condition as possible.

Through the inventive arrangement of the holes of the partitioning member and the holes of the top face member without their overlapping in the plan view, the filtering apparatus recited in claim 3 provides the advantage of enhancing the effect resulting from the construction of claims 1 and 2, without inviting cost increase.

Incidentally, although reference marks and numerals were provided in the above description for facilitating reference to the accompanying drawings, it is understood that the provision of the marks and numerals is not to limit the scope of the invention to the constructions shown in the drawings.

### Brief Description of the Drawings

Fig. 1 is a partially cutaway side view showing a filtering apparatus,
Fig. 2 is a side view in half section showing a diffuser construction,
Fig. 3 is a plan view showing a partitioning member and a top face,
Fig. 4 is a side view in section showing a first alternative construction of principal portions of the diffuser,
Fig. 5 is a side view in section showing a second alternative construction of principal portions of the diffuser,
Fig. 6 is a side view in section showing a third alternative construction of principal portions of the diffuser,
Fig. 7 is a side view in section showing a fourth alternative construction of principal portions of the diffuser,
Fig. 8 is a side view in section showing a fifth alternative construction of principal portions of the diffuser, and
Fig. 9 is a partially cutaway side view showing a conventional filtering apparatus.

### Best Mode of Embodying the Invention

For describing the invention in greater details, the invention will be described with reference to the accompanying drawings.

A water filtering apparatus shown in Fig. 1 includes, within a filtering tower 1 formed like a closed cylinder, a filtering section (r) comprising a first support silica rock layer 2, a second support silica rock layer 3 and a filter medium layer 4 stacked from the bottom to the top in the mentioned order, a water-reserving space S formed upwardly of the filter medium layer 4 and a liquid feeding section (e) provided upwardly of the filtering section (r).

The liquid feeding section (e) includes, within the water-reserving space S, a horizontally oriented inlet pipe (an example of "liquid feeding pipe") 5 inserted into the filtering tower 1 through a lateral wall 1a of the tower 1 and having an upwardly directed orifice 5a at the leading end thereof, and a diffuser A for acting on water as being upwardly discharged from the orifice 5a. Further, there are provided an outlet pipe 6 extending through the lateral wall 1a and a water collecting pipe (an example of "water collecting section") 7 extending continuously from the leading end of the pipe 6 and being exposed to the first support silica rock layer 2.

As shown in Fig. 2, the diffuser A includes a damping portion (k) for damping the momentum of water (example of "filtering liquid" or "liquid to be filtered") discharged from the orifice 5a and a discharging section for discharging the water damped by the damping portion (k) to the outside of the diffuser A. The discharging section includes a first discharging portion 8 for upwardly discharging the water damped by the damping portion (k), a second discharging portion 9 for laterally discharging the water damped by the damping portion (k), and a third discharging portion 10 for downwardly discharging the water damped by the damping portion (k), said first, second and third discharging portions 8, 9 and 10 being stacked one on another from the top to the bottom in the mentioned order.

Referring the construction in greater details, the diffuser A includes a cylindrical box body (b) consisting essentially of a bottom face member 11 defining the orifice 5a, a top face member 13 defining a number of upwardly directed holes 12 (an example of the "first discharging portion 8"), and a lateral face member 16 extending vertically from the bottom face member 11 to the top face member 13. And, a partitioning member 15 (an example of the "damping section") defining a number of holes 14 is interposed between the bottom face member 11 and the top face member 13. And, in the lateral face member 16 at a portion thereof facing a second space 20 formed between the top face member 13 and the partitioning member 15, there are formed a number of lateral holes 17 (an example of the "second discharging portion 9"). And, also in the lateral face member 16, at a further portion thereof facing a first space 19 formed between the partitioning member 15 and the bottom face member 11 and downwardly spaced apart from the partitioning member 15 by a predetermined distanced, there are formed a plurality of laterally elongated slots 18 (an example of the "third discharging portion 10") arranged along the peripheral direction.

The functions of the diffuser A will be briefly described. As shown in Fig. 2, a portion of the impact water discharged from the orifice 5a is damped due to the effect of its collision against the partitioning member 15 acting as the damping section (k) and also changed in its direction, so that this water portion is discharged as "early damped water portion" (in this case, the word "damped" means reduction of momentum) from the elongate slots 18 (third discharging portion 10). A further portion of the impact water which has passed the holes 14 of the partitioning member 15 upward is damped due to the effect of its collision against the top face member 13 acting as another damping portion (k) and changed in its direction, so that this water portion is discharged as "intermediately damped water portion" from the lateral holes 17 (second discharging portion 9). Still another portion of the water, as force remaining water portion, will move further upward and will be discharged as "late damped water portion" upwardly from the upwardly directed holes 12 (first discharging portion 8). Next, these functions will be described in greater details.

The water discharged upward from the orifice 5a will move upward while being laterally diffused over a diffusion angle θ and will advance through the first space 19 to reach and collide against the partitioning member 15. This water collided against and bounced off the partitioning member 15 will then return into the first space 19 and the water portion passing the number of holes 14 will advance into the second space 20. The water which returns to the first space 19 has been damped through the collision against the partitioning member 15, and a portion of the water having a relatively large bounce angle component will be discharged obliquely downward directly through the elongated slots 18 as the early damped water.

That is to say, by setting a relatively large length for the vertical length (d) between the partitioning member 15 and the elongated slots 18, the direction of the portion of the water discharged from the elongated slots 18 by one reflection from the partitioning member 15 can be the obliquely downward direction having a large downward vector component. And, the most of the remaining water discharged from the elongated slots 18 will move like drifting inside the first space 19 and collide against the side face member 16 and/or the partitioning member 15 for a plurality of times, thereby to be changed in direction. Then, this water in a completely damped condition will be discharged from the elongated slots 18.

Next, the water portion which has reached the second space20 will move upward inside the second space 20 and most of it will reach the top face member 13 and then divided into a portion which is discharged upward from the upwardly directed holes 12 and a further portion which is bounced back off the top face member 13 to return to the second space 20. The water portion discharged from the upwardly directed holes 12 will be damped by the constricting effect resulting from its passage through the holes 14 of the partitioning member 15 and the upwardly directed holes 12. And, as shown in Fig. 3, in combined effect with the arrangement of the holes 14 of the partitioning plate 15 and the upwardly directed holes 12 being out of registry from each other in the plan view, said water portion will be damped reliably while its passage through the holes at the two positions and the water portion after being damped will be discharged upwardly.

Incidentally, the upper holes 12 and the lower holes 14 are arranged such that a center (p) of each upwardly directed hole 12 is located between centers (q), (q) of two adjacent holes 14, 14 and also that the center (q) of each hole 14 of the partitioning member 15 is located between the centers (p), (p) of the adjacent upwardly directed holes 12, 13. From the functional point of view, the first space 19 can be understood as a "water hammer chamber" functioning mainly for weakening the momentum of the water whereas the second space 20 can be understood as a "diffusing chamber" functioning mainly for diffusing the water which has been damped to some extent into a multiple of directions.

And, the water portion which was bounced from the top face member 13 and returned to the second space 20 will be discharged directly or after being changed in direction and damped through its plurality of times of collision against e.g. the lateral face member 16, will be discharged laterally from the number of lateral holes 17.

That is to say, the upper and lower spaces 19, 20 of the partitioning member 15 and the wall faces of e.g. the partitioning member 15, located adjacent these spaces 19, 20, together constitute the damping portion (k). And, the number of upwardly directed holes 12 constitute the first discharging portion 8 and the plurality of lateral holes 17 constitute the second discharging portion 9 and the plurality of elongated slots 17 constitute the third discharging portion 10, respectively.

As a result, the water or water portions discharged respectively from the first, second and third discharging portions 8, 9 and 10 will be damped sufficiently and under this condition the water will be discharged to the inside of the filtering tower over a wide angle range from the upward direction to the obliquely downward direction,. Consequently, as shown in Fig. 1, there will occur no stirring-up or unevenness in the top surface of the filter medium layer 4, so that the horizontal surface condition may be maintained.

Next, further embodiments than the above-described embodiment will be described.

The main purpose of the diffuser A relating to the present invention is to allow damped liquid to be discharged over a wide range including the upward direction, lateral direction and downward direction. The especially important aspect thereof is how the damped water is to be discharged downward (obliquely downward). In this respect, further constructions described below may be employed alternatively.

As shown in Fig. 4, the third discharging portion 10 may be constructed as obliquely downwardly oriented inclined holes 21 defined in the lateral face member 16.

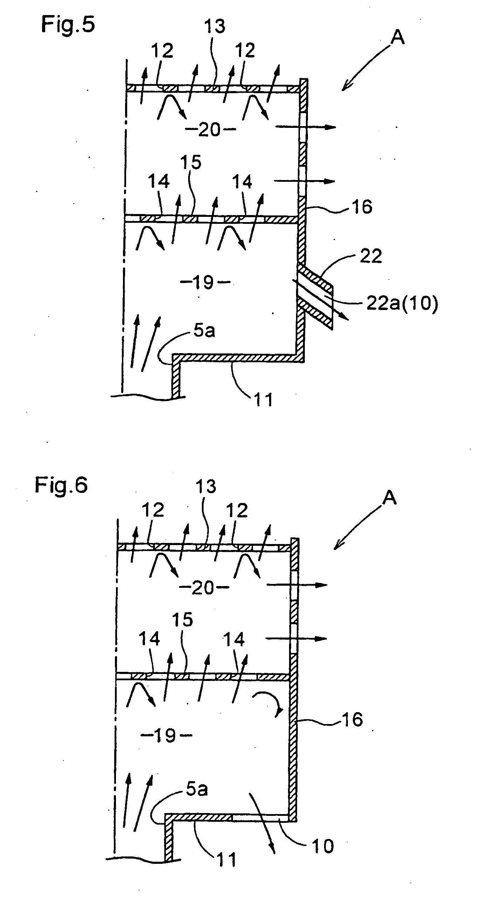

As shown in Fig. 5, the third discharging portion 10 may be provided as an obliquely extending pipe member 22 attached to the lateral face member 16 so that the member 22 may act as a guide passage 22a for guiding water obliquely downward.

As shown in Fig. 6, instead of providing any openings or holes as the third discharging portion 10 in the lateral face member 16 per se, the outer radius side of the bottom side member 11 may be provided with discontinuity by providing holes or the like, thereby to form the third discharging portion 10.

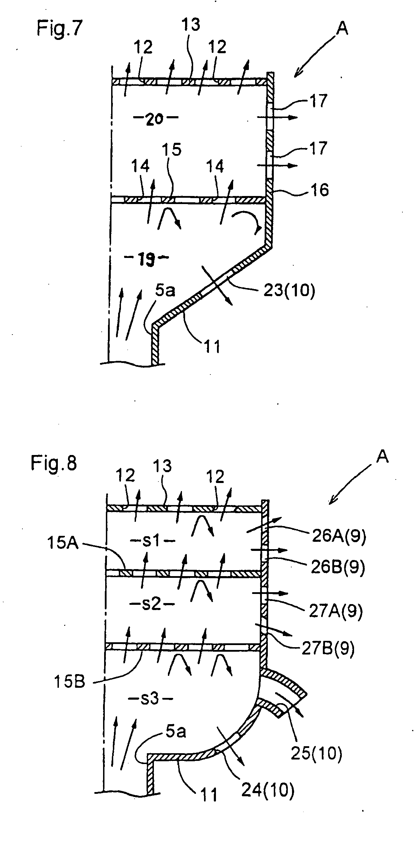

As shown in Fig. 7, the bottom face member 11 may be formed like a funnel and through holes 23 may be provided at vertically intermediate portions of this funnel-like member, so that the through holes may act as the third discharging portion 10.

As shown in Fig. 8, upper and lower two stages of partitioning members 15A, 15B may be provided for forming upper, intermediate and lower three stages of space portions s1, s2, s3 and a curved-face-like bottom face member 11 having a plurality of holes 24 and a pipe 25 acting together as the third discharging portion 10 may be provided. The lateral face member 16 portion located at the upper space portion s2 defines upwardly directed and laterally directed holes 26A, 26B while the lateral face member 16 portion located at the intermediate space portion s2 defines laterally directed and downward directed holes 27A, 27B. These lateral holes 26A, 26B, 27A, 27B all function as the second discharging portion 9.

Incidentally, the filtering liquid or liquid to be filtered is not limited to water or some water solution, but can be any other liquid such as oil, alcohol or the like. All these are generically referred to herein as "liquid".

### Industrial Applicability

As described above, according to the filtering apparatus of the present invention, the existing filtering tower can be used as it is without any enlargement thereof and the filtering liquid may fall uniformly over substantially entire top surface of the filter medium layer. Therefore, even when light-weight filter medium is employed, the flatness in the top surface of the filter medium layer can be maintained easily, so that the filter medium layer and the entire filtering apparatus can achieve their desired filtering performance, hence being suitable for filtering various kinds of filtering liquid in an efficient manner.

## Claims

1. A filtering apparatus including, within a filtering tower (1) having a lid, a filtering section (r), a liquid collecting section (7) disposed downwardly of the filtering section, and a liquid feeding section (e) disposed upwardly of the filtering section, the liquid feeding section including a liquid feeding pipe (5) inserted into the filtering tower from the outside thereof and having an orifice (5a) oriented upward and formed at the leading end thereof, and a diffuser (A) for acting on the liquid being discharged upward from said orifice (5a), **characterized in that** said diffuser (A) comprises a box body (b) including a number of holes (12) in a top face (13) and a number of holes (17, 21; 26A, 26B, 27A, 27B) or a number of holes (17) and at least one slot (18) in a lateral face (16) thereof, a partitioning member (15; 15B) defining a number of holes (14) being disposed inside said box body (b), wherein upper and lower spaces (19, 20) and said partitioning member (15; 15B) together form a damping portion (k) for damping the momentum of the liquid discharged from said orifice (5a), and said box body (b) includes the damping portion (k), a first discharging portion (8) for upwardly discharging the liquid damped by said damping portion (k), a second discharging portion (9) for laterally discharging the liquid damped by said damping portion (k), and a third discharging portion (10) for downwardly discharging the liquid damped by said damping portion (k); said first, second and third discharging portions (8, 9, 10) being stacked one on another from the top to the bottom in the order of said first discharging portion (8), said second discharging portion (9) and said third discharging portion (10).

2. The filtering apparatus according to claim 1, wherein said box body (b) constituting said diffuser (A) further includes a bottom face member (11) defining said orifice (5a), the top face member (13) disposed upwardly of said bottom face member (11), and the lateral face member (16) extending from said bottom face member (11) to the top face member (13);
said partitioning member (15) being interposed between said bottom face member (11) and the top face member (13), and upper and lower spaces (20, 19) partitioned from each other by said partitioning member (15) together form said damping portion (k); and
said first discharging portion (8) comprises said holes (12) in the top face member (13) upwardly defined therein.

3. The filtering apparatus according to claim 2, wherein said second discharging portion (9) comprises said holes (17) defined laterally in the lateral face member (16) at a portion thereof located between the top face member (13) and said partitioning member (15) facing said upper space (20); and
said third discharging portion (10) comprises
said at least one slot (18) formed laterally elongated at a portion of the lateral face member (16) downwardly spaced apart from said partitioning member (15) by a predetermined distance (d) facing said lower space (19); or
said holes (21) defined as obliquely downwardly oriented inclined holes at a portion of the lateral face member (16) facing said lower space (19); or
one hole defined as an obliquely downwardly extending pipe member (22) attached to the lateral face member (16) at a portion of the lateral face member (16) facing said lower space (19); or
a plurality of holes formed in the outer radius side of said bottom face member (11) facing said lower space (19), wherein said bottom face member (11) has a plate-like shape; or
a plurality of holes (23) formed at vertically intermediate portions of said bottom face member (11) facing said lower space (19), wherein said bottom face member (11) has a funnel-like shape.

4. The filtering apparatus according to claim 2, wherein said box body (b) further includes a second partitioning member (15A) being interposed between the first partitioning member (15B) and the top face member (13); and upper and intermediate stages (s1, s2) partitioned from each other by said second partitioning member (15A) being comprised in said upper space (20);
said lower space (19) defines a lower stage (s3);
said second discharging portion (9) comprises
said holes (26B) and a plurality of upwardly directed holes (26A) formed in the lateral face member (16) facing said upper stage (s1),
said holes (27A) and a plurality of downwardly directed holes (27B) formed in the lateral face member (16) facing said intermediate stage (s2); and
said third discharging portion (10) comprises
a plurality of holes (24) and a pipe (25) formed in said bottom face member (11) facing said lower stage (s3), wherein said bottom face member (11) has a curved-face-like shape.

5. The filtering apparatus according to one of claims 1 to 4, wherein said holes (14) defined in said partitioning member (15) and the holes (12) defined in the top face member (13) are arranged so as not be overlapped in a plan view.

6. Method for upgrading a filtering apparatus having
a lid, a filtering section (r), a liquid collecting section (7) disposed downwardly of the filtering section, and a liquid feeding section (e) disposed upwardly of the filtering section, the liquid feeding section including a liquid feeding pipe (5) inserted into the filtering tower from the outside thereof and having an orifice (5a) oriented upward and formed at the leading end thereof, and a diffuser for acting on the liquid being discharged upward from the orifice,
**characterized by** the step of replacing the diffuser connected to said orifice (5a) by another diffuser (A) comprising
a box body (b) including a number of holes (12) in a top face (13) and a number of holes (17, 21; 26A, 26B, 27A, 27B) or a number of holes (17) and at least one slot (18) in a lateral face (16) thereof, a partitioning member (15; 15B) defining a number of holes (14) being disposed inside said box body (b), wherein upper and lower spaces (19, 20) and said partitioning member (15; 15B) together form a damping portion (k) for damping the momentum of the liquid discharged from said orifice (5a), and said box includes the damping portion (k), a first discharging portion (8) for upwardly discharging the liquid damped by said damping portion (k), a second discharging portion (9) for laterally discharging the liquid damped by said damping portion (k), and a third discharging portion (10) for downwardly discharging the liquid damped by said damping portion (k), said first, second and third discharging portions (8, 9, 10) being stacked one on another from the top to the bottom in the order of said first discharging portion (8), said second discharging portion (9) and said third discharging portion (10).

## Patentansprüche

1. Filtriervorrichtung, die in einem Filterturm (1) mit Deckel einen Filtrierabschnitt (r), einen Flüssigkeitssammelabschnitt (7), der unterhalb des Filtrierabschnitts angeordnet ist, und einen Flüssigkeitszufuhrabschnitt (e), der über dem Filtrierabschnitt angeordnet ist, umfasst, wobei der Flüssigkeitszufuhrabschnitt ein von außen in den Filtrierturm eingesetztes Flüssigkeitszufuhrrohr (5) aufweist, das eine an seinem vorderen Ende ausgebildete und nach oben orientierte Öffnung (5a) besitzt und einen Diffusor (A) enthält, der auf die von der Öffnung (5a) nach oben ausgegebene Flüssigkeit wirkt,
**dadurch gekennzeichnet, dass** der Diffusor (A) einen Kastenkörper (b) umfasst, der zahlreiche Löcher (12) in einer oberen Fläche (13) und zahlreiche Löcher (17, 21; 26A, 26B, 27A, 27B) oder zahlreiche Löcher (17) und wenigstens einen Schlitz (18) in einer seitlichen Fläche enthält, wobei ein Trennwandelement (15; 15B) zahlreiche Löcher (14) definiert, die in dem Kastenkörper (b) angeordnet sind, wobei obere und untere Räume (19, 20) und das Trennwandelement (15; 15B) zusammen einen Dämpfungsabschnitt (k) bilden, um den Impuls der aus der Öffnung (5a) ausgegebenen Flüssigkeit zu dämpfen, und der Kastenkörper (b) den Dämpfungsabschnitt (k), einen ersten Ausgabeabschnitt (8), um die durch den Dämpfungsabschnitt (k) gedämpfte Flüssigkeit nach oben auszugeben, einen zweiten Ausgabeabschnitt (9), um die durch den Dämpfungsabschnitt (k) gedämpfte Flüssigkeit seitlich auszugeben, und einen dritten Dämpfungsabschnitt (10), um die durch den Dämpfungsabschnitt (k) gedämpfte Flüssigkeit nach unten auszugeben, umfasst; wobei der erste, der zweite und der dritte Ausgabeabschnitt (8, 9, 10) von oben nach unten in der Reihenfolge des ersten Ausgabeabschnitts (8), der zweiten Ausgabeabschnitts (9) und des dritten Ausgabeabschnittes (10) übereinander gestapelt sind.

2. Filtriervorrichtung nach Anspruch 1, wobei der Kastenkörper (b), der den Diffusor (A) bildet, ferner ein unteres Flächenelement (11), das die Öffnung (5a) definiert, das obere Flächenelement (13), das über dem unteren Flächenelement (11) angeordnet ist, und das seitliche Flächenelement (16), das sich von dem unteren Flächenelement (11) zu dem oberen Flächenelement (13) erstreckt, umfasst;
wobei das Trennwandelement (15), das zwischen das untere Flächenelement (11) und das obere Flächenelement (13) eingefügt ist, sowie der obere und untere Raum (20, 19), die voneinander durch das Trennwandelement (15) getrennt sind, zusammen den Dämpfungsabschnitt (k) bilden; und
der erste Ausgabeabschnitt (8) die Löcher (12) in dem oberen Flächenelement (13), die darin in Aufwärtsrichtung definiert sind, enthält.

3. Filtriervorrichtung nach Anspruch 2, wobei der zweite Ausgabeabschnitt (9) die Löcher (17) umfasst, die seitlich in dem seitlichen Flächenelement (16) in einem Abschnitt hiervon definiert sind, der sich zwischen dem oberen Flächenelement (13) und dem Trennwandelement (15) befindet, das dem oberen Raum (20) zugewandt ist; und
der dritte Ausgabeabschnitt (10) umfasst:
den wenigstens einen Schlitz (18), der seitlich ausgedehnt in einem Abschnitt des seitlichen Flächenelements (16), das dem unteren Raum (19) zugewandt ist, ausgebildet ist und von dem Trennwandelement (15) um einen vorgegebenen Abstand (d) nach unten beabstandet ist; oder
die Löcher (21), die als schräg nach unten orientierte geneigte Löcher in einem Abschnitt des seitlichen Flächenelements (16), das dem unteren Raum (19) zugewandt ist, definiert sind; oder
ein Loch, das als ein schräg nach unten verlaufendes Rohrelement (22) definiert ist, das an dem seitlichen Flächenelement (16) in einem Abschnitt des seitlichen Flächenelements (16), das dem unteren Raum (19) zugewandt ist, befestigt ist; oder
mehrere Löcher, die in der Außenradiusseite des unteren Flächenelements (11), das dem unteren Raum (19) zugewandt ist, ausgebildet sind,
wobei das untere Flächenelement (11) eine plattenartige Form besitzt; oder
mehrere Löcher (23), die in vertikalen Zwischenabschnitten des unteren Flächenelements (11), das dem unteren Raum (19) zugewandt ist, ausgebildet sind, wobei das untere Flächenelement (11) eine trichterartige Form hat.

4. Filtriervorrichtung nach Anspruch 2, wobei der Kastenkörper (b) ferner ein zweites Trennwandelement (15A) enthält, das zwischen das erste Trennwandelement (15B) und das obere Flächenelement (13) eingefügt ist; und wobei in dem oberen Raum (20) eine obere Stufe und eine Zwischenstufe (s1, s2) die voneinander durch das zweite Trennwandelement (15A) getrennt sind, enthalten sind;
der untere Raum (19) eine untere Stufe (s3) definiert;
der zweite Ausgabeabschnitt (9) umfasst:
die Löcher (26B) und mehrere nach oben gerichtete Löcher (26A), die in dem seitlichen Flächenelement (16), das der oberen Stufe (s1) zugewandt ist, ausgebildet sind,
die Löcher (27A) und mehrere nach unten gerichtete Löcher (27B) die in dem seitlichen Flächenelement (16), das der Zwischenstufe (s2) zugewandt ist, ausgebildet sind; und
der dritte Ausgabeabschnitt (10) umfasst:
mehrere Löcher (24) und ein Rohr (25), die in dem unteren Flächenelement (11), das der unteren Stufe (s3) zugewandt ist, ausgebildet sind,
wobei das untere Flächenelement (11) die Form einer gekrümmten Fläche hat.

5. Filtriervorrichtung nach einem der Ansprüche 1 bis 4, wobei die Löcher (14), die in dem Trennwandelement (15) definiert sind, und die Löcher (12), die in dem oberen Flächenelement (13) definiert sind, so angeordnet sind, dass sie in einer Draufsicht nicht überlappen.

6. Verfahren zum Aufrüsten einer Filtriervorrichtung, die umfasst:
einen Deckel, einen Filtrierabschnitt (r), einen Flüssigkeitssammelabschnitt (7), der unterhalb des Filtrierabschnitts angeordnet ist, und einen Flüssigkeitszufuhrabschnitt (e), der oberhalb des Filtrierabschnitts angeordnet ist, wobei der Flüssigkeitszufuhrabschnitt ein von außen in den Filtrierturm eingesetztes Flüssigkeitszufuhrrohr (5) aufweist, das eine an seinem vorderen Ende ausgebildete und nach oben orientierte Öffnung (5a) besitzt und einen Diffusor enthält, der auf die aus der Öffnung ausgegebene Flüssigkeit wirkt,
**gekennzeichnet durch** den Schritt des Ersetzens des mit der Öffnung (5a) verbundenen Diffusors **durch** einen weiteren Diffusor (A), der umfasst:
einen Kastenkörper (b), der zahlreiche Löcher (12) in einer oberen Fläche (13) und zahlreiche Löcher (17, 21; 26A, 26B, 27A, 27B) oder zahlreiche Löcher (17) und wenigstens einen Schlitz (18) in einer seitlichen Fläche (16) hiervon, und ein Trennwandelement (15; 15B), das zahlreiche Löcher (14) definiert, die in dem Kastenkörper (b) angeordnet sind, umfasst,
wobei obere und untere Räume (19, 20) und das Trennwandelement (15; 15B) zusammen einen Dämpfungsabschnitt (k) bilden, um den Impuls der aus der Öffnung (5a) ausgegebenen Flüssigkeit zu dämpfen, wobei der Kasten den Dämpfungsabschnitt (k), einen ersten Ausgabeabschnitt (8), um die durch den Dämpfungsabschnitt (k) gedämpfte Flüssigkeit nach oben auszugeben, einen zweiten Ausgabeabschnitt (9), um die **durch** den Dämpfungsabschnitt (k) gedämpfte Flüssigkeit seitlich auszugeben, und einen dritten Ausgabeabschnitt (10), um die **durch** den Dämpfungsabschnitt (k) gedämpfte Flüssigkeit nach unten auszugeben, umfasst, wobei der erste, der zweite und der dritte Ausgabeabschnitt (8, 9, 10) von oben nach unten in der Reihenfolge des ersten Ausgabeabschnitts (8), des zweiten Ausgabeabschnitts (9) und des dritten Ausgabeabschnitts (10) übereinander gestapelt sind.

## Revendications

1. Dispositif de filtrage, comprenant, à l'intérieur d'une tour de filtrage (1) comportant un couvercle, une section de filtrage (r), une section de collecte de liquide (7) disposée en bas de la section de filtrage, et une section de délivrance de liquide (e) disposée en haut de la section de filtrage, la section de délivrance de liquide comprenant un tuyau de délivrance de liquide (5) inséré dans la tour de filtrage à partir de l'extérieur de celle-ci et comportant un orifice (5a) orienté vers le haut et formé à l'extrémité avant de celui-ci, et un diffuseur (A) pour agir sur le liquide qui est déchargé vers le haut à partir dudit orifice (5a), **caractérisé en ce que** ledit diffuseur (A) comprend un corps de boîte (b) comprenant un certain nombre de trous (12) dans une face supérieure (13) et un certain nombre de trous (17, 21 ; 26A, 26B, 27A, 27B) ou un certain nombre de trous (17) et au moins une fente (18) dans une face latérale (16) de celui-ci, un élément de séparation (15 ; 15B) définissant un certain nombre de trous (14) qui sont disposés à l'intérieur dudit corps de boîte (b), des espaces supérieur et inférieur (19, 20) et ledit élément de séparation (15 ; 15B) formant ensemble une partie d'amortissement (k) pour amortir l'élan du liquide déchargé à partir dudit orifice (5a), et ledit corps de boîte (b) comprenant la partie d'amortissement (k), une première partie de décharge (8) pour décharger vers le haut le liquide amorti par ladite partie d'amortissement (k), une deuxième partie de décharge (9) pour décharger latéralement le liquide amorti par ladite partie d'amortissement (k), et une troisième partie de décharge (10) pour décharger vers le bas le liquide amorti par ladite partie d'amortissement (k) ; lesdites première, deuxième et troisième parties de décharge (8, 9, 10) étant empilées les unes sur les autres de haut en bas dans l'ordre de ladite première partie de décharge (8), ladite deuxième partie de décharge (9) et ladite troisième partie de décharge (10).

2. Dispositif de filtrage selon la revendication 1, dans lequel ledit corps de boîte (b) constituant ledit diffuseur (A) comprend de plus un élément de face inférieure (11) définissant ledit orifice (5a), l'élément de face supérieure (13) disposé en haut dudit élément de face inférieure (11), et l'élément de face latérale (16) s'étendant dudit élément de face inférieure (11) à l'élément de face supérieure (13) ;
ledit élément de séparation (15) étant interposé entre ledit élément de face inférieure (11) et l'élément de face supérieure (13), et des espaces supérieur et inférieur (20, 19) séparés l'un de l'autre par ledit élément de séparation (15) formant ensemble ladite partie d'amortissement (k) ; et
ladite première partie de décharge (8) comprenant lesdits trous (12) dans l'élément de face supérieure (13) défini vers le haut dans celle-ci.

3. Dispositif de filtrage selon la revendication 2, dans lequel ladite deuxième partie de décharge (9) comprend lesdits trous (17) définis latéralement dans l'élément de face latérale (16) en une partie de celui-ci située entre l'élément de face supérieure (13) et ledit élément de séparation (15) faisant face audit espace supérieur (20) ; et
ladite troisième partie de décharge (10) comprend :
ladite fente au nombre d'au moins une (18) formée de façon latéralement allongée au niveau d'une partie de l'élément de face latérale (16) espacée vers le bas dudit élément de séparation (15) d'une distance prédéterminé (d) dans la direction dudit espace inférieur (19) ; ou
lesdits trous (21) définis comme étant des trous inclinés orientés en oblique vers le bas au niveau d'une partie de l'élément de face latérale (16) faisant face audit espace inférieur (19) ; ou
un trou défini sous la forme d'un élément de tuyau s'étendant en oblique vers le bas (22) fixé à l'élément de face latérale (16) au niveau d'une partie de l'élément de face latérale (16) faisant face audit espace inférieur (19) ; ou
une pluralité de trous formés dans le côté de rayon extérieur dudit élément de face inférieure (11) faisant face audit espace inférieur (19), ledit élément de face inférieure (11) ayant une forme de plaque ; ou
une pluralité de trous (23) formés au niveau de parties verticalement intermédiaires dudit élément de face inférieure (11) faisant face audit espace inférieur (19), ledit élément de face inférieure (11) ayant une forme d'entonnoir.

4. Dispositif de filtrage selon la revendication 2, dans lequel ledit corps de boîte (b) comprend de plus un deuxième élément de séparation (15A) qui est interposé entre le premier élément de séparation (15B) et l'élément de face supérieure (13) ; et des étages supérieur et intermédiaire (s1, s2) séparés l'un de l'autre par ledit deuxième élément de séparation (15A) qui est compris dans ledit espace supérieur (20) ;
ledit espace inférieur (19) définissant un étage inférieur (s3) ;
ladite deuxième partie de décharge (9) comprenant :
lesdits trous (26B) et une pluralité de trous dirigés vers le haut (26A) formés dans l'élément de face latérale (16) faisant face audit étage supérieur (s1),
lesdits trous (27A) et une pluralité de trous dirigés vers le bas (27B) formés dans l'élément de face latérale (16) faisant face audit étage intermédiaire (s2) ; et
ladite troisième partie de décharge (10) comprenant :
une pluralité de trous (24) et un tuyau (25) formés dans ledit élément de face inférieure (11) faisant face audit étage inférieur (s3), ledit élément de face inférieure (11) ayant une forme de face incurvée.

5. Dispositif de filtrage selon l'une des revendications 1 à 4, dans lequel lesdits trous (14) définis dans ledit élément de séparation (15) et les trous (12) définis dans l'élément de face supérieure (13) sont disposés de façon à ne pas se chevaucher en vue en plan.

6. Procédé pour rénover un dispositif de filtrage comportant :
un couvercle, une section de filtrage (r), une section de collecte de liquide (7) disposée en bas de la section de filtrage, et une section de délivrance de liquide (e) disposée en haut de la section de filtrage, la section de délivrance de liquide comprenant un tuyau de délivrance de liquide (5) inséré dans la tour de filtrage à partir de l'extérieur de celle-ci et comportant un orifice (5a) orienté vers le haut et formé à l'extrémité avant de celui-ci, et un diffuseur pour agir sur le liquide qui est déchargé vers le haut à partir de l'orifice,
**caractérisé par** l'étape consistant à remplacer le diffuseur relié audit orifice (5a) par un autre diffuseur (A), comprenant :
un corps de boîte (b) comprenant un certain nombre de trous (12) dans une face supérieure (13) et un certain nombre de trous (17, 21 ; 26A, 26B, 27A, 27B) ou un certain nombre de trous (17) et au moins une fente (18) dans une face latérale (16) de celui-ci, un élément de séparation (15 ; 15B) définissant un certain nombre de trous (14) qui sont disposés à l'intérieur dudit corps de boîte (b), des espaces supérieur et inférieur (19, 20) et ledit élément de séparation (15 ; 15B) formant ensemble une partie d'amortissement (k) pour amortir l'élan du liquide déchargé à partir dudit orifice (5a), et ladite boîte comprenant la partie d'amortissement (k), une première partie de décharge (8) pour décharger vers le haut le liquide amorti par ladite partie d'amortissement (k), une deuxième partie de décharge (9) pour décharger latéralement le liquide amorti par ladite partie d'amortissement (k), et une troisième partie de décharge (10) pour décharger vers le bas le liquide amorti par ladite partie d'amortissement (k), lesdites première, deuxième et troisième parties de décharge (8, 9, 10) étant empilées les unes sur les autres de haut en bas dans l'ordre de ladite première partie de décharge (8), ladite deuxième partie de décharge (9) et ladite troisième partie de décharge (10).
